(19) **Europäisches Patentamt**
**European Patent Office**
**Office européen des brevets**

(11) **EP 1 521 986 B1**

(12) **EUROPEAN PATENT SPECIFICATION**

(45) Date of publication and mention
of the grant of the patent:
**09.05.2007 Bulletin 2007/19**

(51) Int Cl.:
*G02B 6/12* (2006.01)

(21) Application number: **03731473.9**

(86) International application number:
**PCT/US2003/017180**

(22) Date of filing: **29.05.2003**

(87) International publication number:
**WO 2004/005988 (15.01.2004 Gazette 2004/03)**

(54) **THERMAL COMPENSATION OF WAVEGUIDES BY DUAL MATERIAL CORE**

THERMISCHE KOMPENSATION VON WELLENLEITERN MIT KERN AUS ZWEI VERSCHIEDENEN MATERIALIEN

COMPENSATION THERMIQUE DE GUIDES D'ONDES PAR NOYAU DE MATIERE DUAL

(84) Designated Contracting States:
**AT BE BG CH CY CZ DE DK EE ES FI FR GB GR HU IE IT LI LU MC NL PT RO SE SI SK TR**

(30) Priority: **02.07.2002 US 190411**

(43) Date of publication of application:
**13.04.2005 Bulletin 2005/15**

(73) Proprietor: **Intel Corporation**
**Santa Clara, CA 95052 (US)**

(72) Inventor: **JOHANNESSEN, Kjetil**
**Trondheim 7051 (NO)**

(74) Representative: **Dunlop, Hugh Christopher et al**
**R G C Jenkins & Co.**
**26 Caxton Street**
**London SW1H 0RJ (GB)**

(56) References cited:
EP-A- 1 026 526          US-A- 6 002 823
US-A- 6 118 909          US-B1- 6 311 004

• KOKUBUN Y ET AL: "ATHERMAL NARROW-BAND OPTICAL FILTER AT 1.55 MUM WAVELENGTH BY SILICA-BASED ATHERMAL WAVEGUIDE" IEICE TRANSACTIONS ON ELECTRONICS, INSTITUTE OF ELECTRONICS INFORMATION AND COMM. ENG. TOKYO, JP, vol. E81-C, no. 8, August 1998 (1998-08), pages 1187-1194, XP000848520 ISSN: 0916-8524
• KOKUBUN Y ET AL: "Three-dimensional athermal waveguides for temperature independent lightwave devices" ELECTRONICS LETTERS, IEE STEVENAGE, GB, vol. 30, no. 15, 21 July 1994 (1994-07-21), pages 1223-1224, XP006000829 ISSN: 0013-5194

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**EP 1 521 986 B1**

**Description**

<u>BACKGROUND OF THE INVENTION</u>

<u>1. Field of the Invention</u>

The described invention relates to the field of optical circuits. In particular, the invention relates to thermal compensation in an optical waveguide.

<u>2. Description of Related Art</u>

Optical circuits include, but are not limited to, light sources, detectors and/or waveguides that provide such functions as splitting, coupling, combining, multiplexing, demultiplexing, and switching. Planar lightwave circuits(PLCs) are optical circuits that are manufactured and operate in the plane of a wafer. PLC technology is advantageous because it can be used to form many different types of optical devices, such as array waveguide grating (AWG) filters, optical add/drop (de) multiplexers, optical switches, monolithic, as well as hybrid opto-electronic integrated devices. Such devices formed with optical fibers would typically be much larger or would not be feasible at all. Further, PLC structures may be mass produced on a silicon wafer.

PLCs often have been based on silica-on-silicon (SOS) technology, but may alternatively be implemented using other technologies such as, but not limited to, siliconon-insulator (SOI), polymer on silicon, and so forth.

Thermal compensation for some optical circuits, such as phase-sensitive optical circuits, is important as devices may be operated in locations where temperatures cannot be assured. In some cases, optical circuits are combined with temperature regulating equipment. However, these configurations may be less than ideal, since the devices are prone to failure if there is a power outage, and temperature regulating equipment may require a large amount of power which may not be desirable.

US-B1-6311004 describes a photonic device pertaining to the features of the preamble of claim 1.

<u>BRIEF DESCRIPTION OF THE DRAWINGS</u>

Figure 1A-1C are schematic diagrams showing one embodiment of a cross-sectional view of a waveguide structure being modified to be thermally-compensating.

Figure 2 is a flowchart showing one embodiment of a method for fabricating a thermally-compensating waveguide.

Figure 3 is a schematic diagram showing one embodiment of an array waveguide grating (AWG) that makes use of the thermally-compensating waveguides.

Figure 4 is a schematic diagram showing an embodiment of a PLC comprising an interferometric component that uses thermally-compensating waveguides in its coupler regions.

Figure 5 is a graph illustrating the normalized mode field intensity in a cross section of a dual material waveguide.

Figure 6 is a graph illustrating an aperture function for a dual material waveguide.

Figures 7A-7C are schematic diagrams that illustrate another embodiment of a thermally compensated waveguide.

Figure 7D is a schematic diagram showing an enlargement of the core of the waveguide of Figure 7A-7C.

Figure 8 is a schematic diagram showing a cross sectional view of another embodiment of a waveguide having a dual material core.

Figure 9 is a schematic diagram showing a cross section view of another embodiment of a waveguide having a dual material core.

<u>DETAILED DESCRIPTION</u>

A planar lightwave circuit comprises one or more waveguides that are thermally-compensating. The thermally-compensating waveguides comprise a cladding and a core that comprises two regions running lengthwise through the core. One region has a negative thermo-optic coefficient ("TOC"); the other region has a positive TOC.

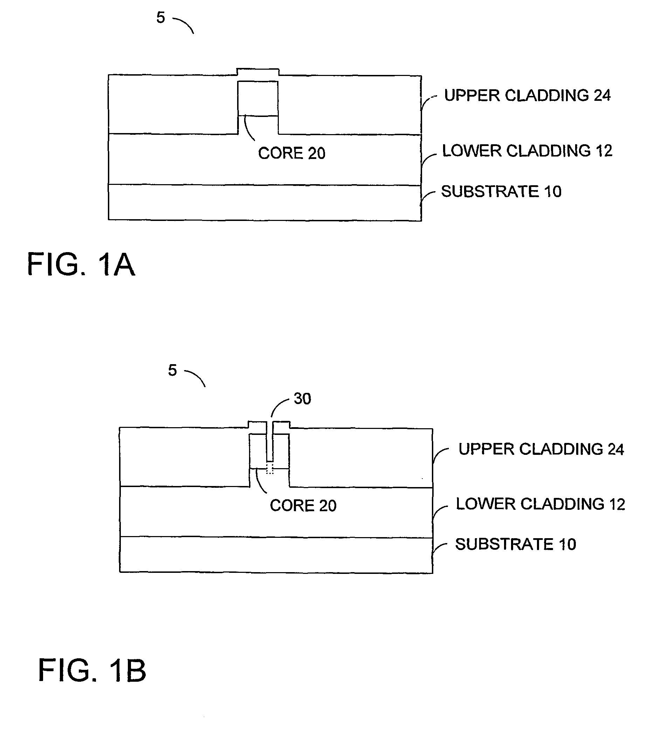

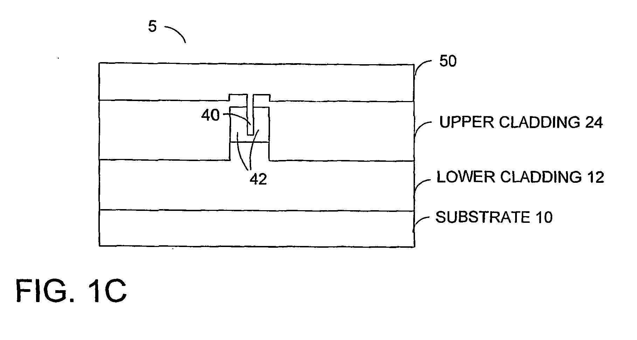

Figure 1A is a schematic diagram showing one embodiment of a cross-sectional view of a waveguide structure 5. In one embodiment, the structure is subsequently modified as described with respect to Figures 1B and 1C to be thermally-compensating.

As shown in Figure 1A, a layer of lower cladding 12 is typically deposited onto a substrate 10. A waveguide core layer 20 is deposited over the lower cladding 12, and an upper cladding 24 is deposited over the waveguide core layer 20. In one example, the substrate 10 is silicon, the lower cladding 12 is $SiO_2$, the core layer 20 is $SiO_2$ doped with

Germanium, and the upper cladding 24 is a borophosphosilicate glass (BPSG). In one embodiment, the upper cladding 24 may form a thin layer of approximately 1-2 microns covering the core.

Figure 1B is a schematic diagram showing one embodiment of a cross-section view of a waveguide after a trench 30 is created in the core layer 20. In one embodiment, the trench 30 is formed to run along a length of the core of the waveguide. The trench may be formed by etching, ion beam milling, or other methods. In one embodiment, the trench has a depth of at least 2/3 of the depth of the core. However, the trench depth may extend down into the lower cladding 12. The width of the trench is designed to be less than a wavelength of the optical signal to be propagated by the waveguide.

Figure 1C is a schematic diagram showing one embodiment of a cross-sectional view of Figure 1B after a layer of material 50 having a negative TOC has been deposited. The negative TOC material 50 fills the trench to form a negative TOC center region 40 of the core. In one embodiment, a polymer, such as silicone, poly(methylmethacrylate) ("PMMA"), or benzocyclobutene ("BCB"), is used. However, various other materials may alternatively be used.

When an optical signal propagates within the waveguide 5, a first portion of the optical field of the optical signal propagates in the negative TOC region 40, and a second portion of the optical field propagates in the positive TOC region 42 of the core. In one embodiment, the first portion of the optical field in the negative TOC region 40 is substantially surrounded by the second portion of the optical field in the positive TOC region 42.

In one embodiment, the refractive index difference between the negative TOC region 40 and the positive TOC region 42 is large enough to allow filling over the negative TOC region 40 with a layer of the same material that serves as an upper cladding. The structure described provides good compensation with low loss over a wide temperature range, and allows for convenient fabrication.

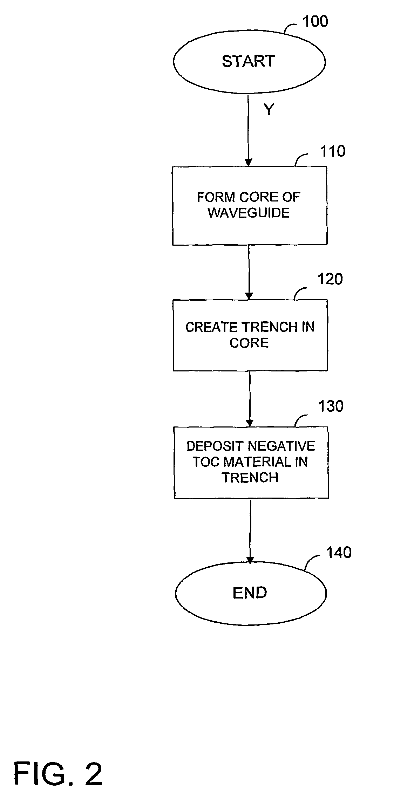

Figure 2 is a flowchart showing one embodiment of a method for fabricating a thermally-compensating waveguide. The flowchart starts at block 100, and continues with block 110, at which a core of the waveguide is formed over an appropriate substrate structure. In one embodiment, the core is formed on a SOS structure and comprises $SiO_2$ doped with Germanium having a cross-sectional area of approximately 6 microns by 6 microns. Other positive TOC materials may alternatively be used. The flowchart continues at block 120 at which a trench is created in the core. In one embodiment, the trench is approximately 1 micron wide and runs an entire length of the waveguide. At block 130, a negative thermo-optic coefficient material is deposited into the trench. In one embodiment, an optical signal of approximately 1550 nm propagates within both the materials making up the core, having both positive and negative TOC regions. The flowchart ends at block 140.

In an alternate embodiment, after the trench is filled with the negative TOC material, another material having a positive TOC may be used to cover the negative TOC material.

The effective index of propagation in the core will have a close to linear response to compensate for the thermal expansion of the substrate, and allows for thermal compensation up to a range of approximately 100 °C. Additionally, the described waveguide structure may be used for curved waveguides. A bend radius of down to 10 mm is achievable with losses on the order of approximately .3 db/cm.

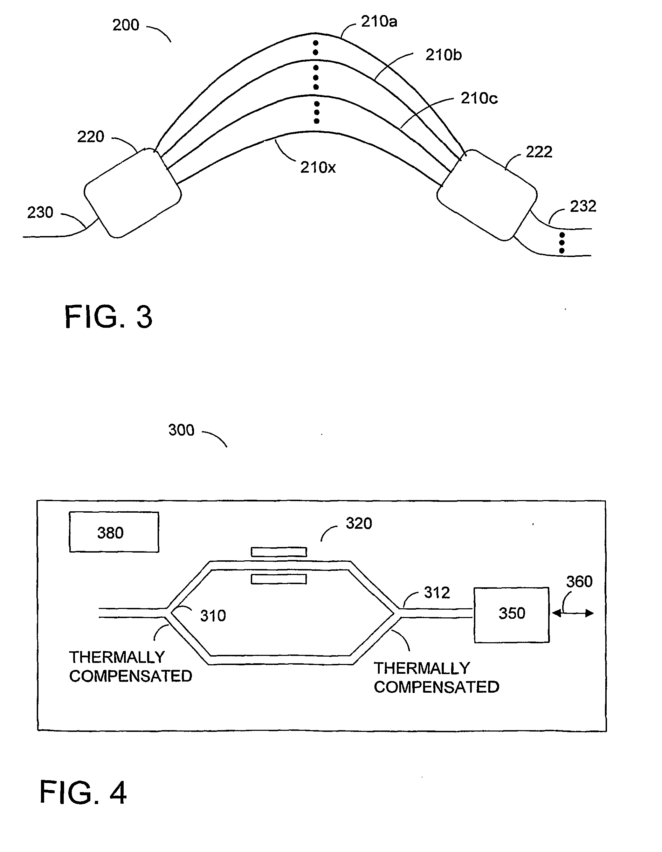

Figure 3 is a schematic diagram showing one embodiment of an array waveguide grating (AWG) 200 that makes use of thermally-compensating waveguides. In one embodiment, the waveguides 210a-210x are thenmally-compensating as previously described, but the star couplers 220 and 222 and the input and output waveguides 230 and 232 are not thermally-compensated, allowing for easier alignment of the input and output waveguides 230 and 232 with other optical components.

Figure 4 is a schematic diagram showing an embodiment of a PLC comprising an interferometric component 300 that uses thermally-compensating waveguides in coupler regions 310 and 312. A temperature regulator 320 is used on a non-thermally-compensated waveguide portion to modify the phase of the optical signal. In one embodiment, an electrical component 350, such as an optical-to-electrical converter and/or electrical-to-optical converter, is coupled to the thermally-compensated waveguide coupler 312. One or more electrical connections 360 couple the electrical component 350 with power and other electrical signals. In an alternate embodiment, the phase modulation may be adjusted using other methods, such as mechanical.

In one embodiment, a temperature regulator 380 may be housed with a thermally-compensated optical circuit to keep the device within its thermally-compensating temperature range.

The thermally-compensating waveguides described compensate single mode waveguides independently. They may be used solely in a phase-sensitive portion or throughout an optical circuit.

A variety of different materials may be used for the thermal-compensation. For example, silicone has a TOC of -39x10-5/°C, PMMA has a TOC of -9x10-5/°C, and BPSG has a TOC of approximately 1.2x10-5/°C. The design of the trench may be altered to compensate for the use of various materials.

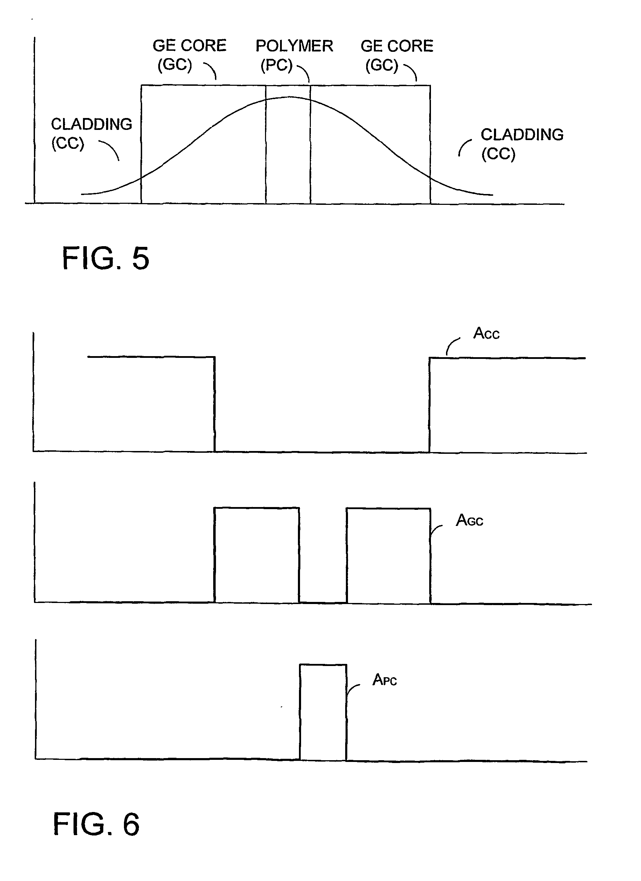

Figure 5 is a graph illustrating the normalized mode field intensity in a cross section of a dual material waveguide. Figure 6 is a graph illustrating an aperture function for a dual material waveguide. In one approximation, the waveguide materials are chosen to satisfy the following relation:

$$\int \Psi A_{PC} \Psi^* \cdot B_{PC} + \int \Psi A_{GC} \Psi^* \cdot B_{GC} + \int \Psi A_{CL} \Psi^* \cdot B_{CL} = -n\alpha_{substrate} \qquad ,$$

wherein

$\Psi$ is the mode field intensity;
$\Psi^*$ is the complex conjugate of the mode field intensity;
$\alpha$ is the linear thermal expansion coefficient, which is dominated by the substrate;
B is the thermo-optic coefficient;
n is the effective index of propagation; and
A is an aperture function having the value 1 within the material and 0 outside the material, and wherein the subscript PC indicates within the polymer core, GC indicates within the Ge Silica core, and CL indicates within the cladding.

For those skilled in the art, it is relatively straight-forward to include effects of strain and polarization to improve the accuracy of the modeling.

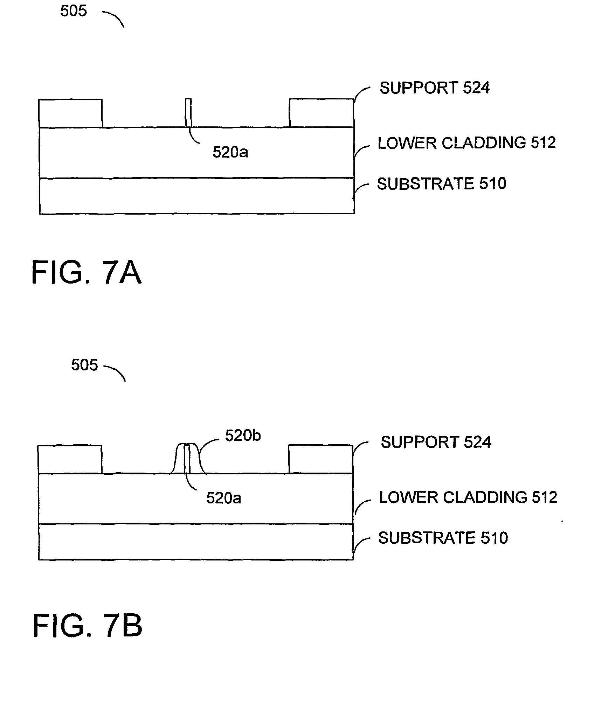

Figures 7A-7C are schematic diagrams that illustrate another embodiment of a thermally compensated waveguide 505. In this embodiment, the core 520 has a central portion that has a positive TOC and an outer portion that has a negative TOC.

Figure 7A shows a first core portion 520a having a positive TOC. The first core portion 520a forms a spike running the length of a waveguide. In one embodiment the first core portion is formed on a lower cladding 512 over a substrate 510, similar to that of Figure 1A. The first core portion may be deposited and then etched to form a spike having the desired dimensions. Support structures 524 may be formed on the lower cladding 512 as long as they are far enough away from the core 520 to prevent light from leaking from the core to the support structure.

Figure 7B shows a negative TOC material deposited over the positive TOC first core portion 520a to form a second core portion 520b. The first core portion 520a and the second core portion 520b make up the core 520. In one embodiment, the negative TOC core material is a polymer ("core polymer"). In one embodiment, the core polymer is formed by spinning accumulation. Alternatively, the core polymer may be applied by other lithography methods. In one embodiment, the core polymer has a refractive index of approximately 1.45 to 1.6.

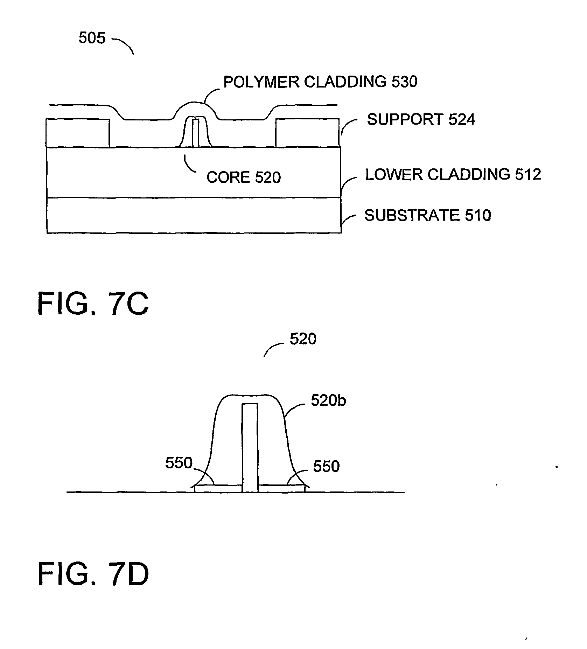

Figure 7C shows a second negative TOC material deposited over the core 520 to form a cladding 530. In one embodiment, the negative TOC material is a polymer ("cladding polymer") and has a refractive index approximately .01 to .05 less than that of the core polymer 520b. In one embodiment, the core polymer and the cladding polymer are related polymers.

Figure 7D is a schematic diagram showing an enlargement of the core 520 of the waveguide 505 of Figures 7A-7C. In one embodiment, an undercladding 550 is deposited before applying the core polymer 520a. This provides an undercladding of polymer under the core, which creates an interface under the core that substantially matches the core/cladding interface on top of the core to provide better performance.

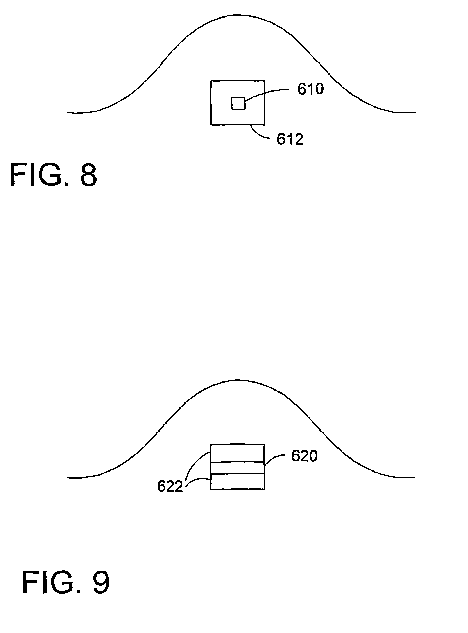

Figure 8 is a schematic diagram showing a cross sectional view of another embodiment of a waveguide having a dual material core. In this embodiment, an inner core 610 is completely surrounded by an outer core 612. The inner core has a positive TOC and the outer core has a negative TOC. The inner and outer cores may comprise polymer or other suitable materials.

Figure 9 is a schematic diagram showing a cross section view of another embodiment of a waveguide having a dual material core. In this embodiment, an inner core 620 is sandwiched between an outer core 622. The inner core, however, lies substantially in the plane of the substrate of the PLC, and will not have as good optical confinement for PLC's with significant bend radii compared to the structures previously described with respect to Figures 1C and 7C having inner cores in a plane substantially perpendicular to the plane of the substrate of the PLC.

Thus, an apparatus and method for making thermally-compensating planar lightwave circuit is disclosed. However, the specific embodiments and methods described herein are merely illustrative. For example, although the techniques for thermally compensating waveguides were described in terms of an SOS structure, the techniques are not limited to SOS structures. Numerous modifications in form and detail may be made without departing from the scope of the invention as claimed below. The invention is limited only by the scope of the appended claims.

**Claims**

1.    A planar lightwave circuit comprising:

a first waveguide (5, 505) having a cladding (24, 12, 530, 512) and a core (20, 520) substantially confined by the cladding, the core comprising first and second regions (40, 42, 520a, 520b) both running lengthwise through the core and the first region running substantially lengthwise through a central portion of the second region, the first region having a positive thermo-optic coefficient, the second region having a negative thermo-optic coefficient,

**characterised by** the first region having a width less than wavelengths of optical signals to be propagated by the core, such that the optical signals propagate within both the first and the second region, wherein the positive thermo-optic coefficient of the first region thermally-compensates for the negative thermo-optic coefficient of the second region to create a thermally-compensated effective index of propagation in the core.

2. The planar lightwave circuit of claim 1, wherein the first region (40, 520b) comprises a polymer.

3. The planar lightwave circuit of claim 2, wherein the polymer comprises silicone, PMMA or BCB.

4. The planar lightwave circuit of claim 1, wherein the second region (42, 520a) comprises doped silica.

5. The planar lightwave circuit of claim 1, wherein the first region (40, 520b) forms an enclosed channel running lengthwise through the central portion of the second region (42, 520a).

6. The planar lightwave circuit of claim 1, -wherein the planar lightwave circuit comprises an interferometer.

7. The planar lightwave circuit of claim 6, wherein the planar lightwave circuit is a Mach Zehnder interferometer.

8. The planar lightwave circuit of claim 1, wherein the planar lightwave circuit comprises a coupler.

9. The planar lightwave circuit of claim 1, wherein the planar lightwave circuit comprises an array waveguide grating.

10. The planar lightwave circuit of claim 1, further comprising:

a second waveguide that is not thermally-compensating, the second waveguide comprising a core comprising a single material having a positive thermo-optic coefficient.

11. The planar lightwave circuit of claim 1, wherein the first waveguide (5, 505) has a bend radius down to 10 mm.

12. The planar lightwave circuit of claim 1, wherein the first region (40, 520b) extends into the second region (42, 520a) by at least two-thirds.

13. The planar lightwave circuit of claim 1, wherein the second region (42, 520a) comprises a polymer.

14. The planar lightwave circuit of claim 1, wherein the width of the inner core (20, 520) is approximately 1 micron or less.

15. A planar lightwave circuit in accordance with any one of the preceding claims, further comprising a temperature regulator.

16. A method of making a waveguide comprising:

forming a first core portion (40, 520b) of a waveguide, the first core portion having a positive thermo-optic coefficient;
forming a second core portion (42, 520a) by substantially covering the first core portion with a material having a negative thermo-optic coefficient the first core portion running substantially lengthwise through a central portion of the second core portion; and
forming a cladding (24, 12, 530, 512) that substantially encloses the first core portion and the second core portion,

**characterised in that** the first core portion has a width less than wavelengths of optical signals to be propagated by the first and second core portions, such that the optical signals propagate within both the first and the second core portions, wherein the positive thermo-optic coefficient of the first core portion thermally-compensates for the negative thermo-optic coefficient of the second core portion to create a thermally-compensated effective index of propagation in the first and second core portions.

17. The method of claim 16, wherein forming a second core portion (42, 520a) further comprises:

covering the first core portion (40, 520b) with a first polymer.

18. The method of claim 17, wherein covering the first core portion (40, 520b) with a first polymer further comprises:

covering the first core portion with a first polymer having a refractive index of approximately 1.45 to 1.6.

19. The method of claim 17, wherein covering the first core portion (40, 520b) with a first polymer further comprises:

accumulating the first polymer around the first core portion via a spinning process.

20. The method of claim 17, wherein forming the cladding further comprises:

covering the first and second core portions (40, 42, 520a, 520b) with a second polymer.

21. The method of claim 20, wherein covering the first and second core portions (40, 42, 520a, 520b) with a second polymer further comprises:

covering the first and second core portions with the second polymer having a refractive index approximately .01 to .05 less than that of the first polymer.

22. A method of guiding an optical signal through a planar waveguide of a planar lightwave circuit according to any one of claims 1-15, wherein the optical signal has an optical field, the method comprising:

guiding a first portion of the optical field in said first region;
guiding a second portion of the optical field in said second region.

23. The method of claim 22, wherein the first portion of the optical field and the second portion of the optical field are substantially concentric.

24. The method of claim 22, wherein the first portion of the optical field is guided within the second portion of the optical field.

**Patentansprüche**

1. Ebene Lichtwellenschaltung, umfassend:

einen ersten Wellenleiter (5, 505), der eine Beschichtung (24, 12, 530, 512) und einen Kern (20, 520) aufweist, der im Wesentlichen durch die Beschichtung begrenzt ist, wobei der Kern erste und zweite Bereiche (40, 42, 520a, 520b) umfasst, die beide längs durch den Kern verlaufen und wobei der erste Bereich im Wesentlichen längs durch einen mittleren Abschnitt des zweiten Bereichs verläuft, wobei der erste Bereich einen positiven thermooptischen Koeffizienten aufweist, wobei der zweite Bereich einen negativen thermooptischen Koeffizienten aufweist, **gekennzeichnet durch** den ersten Bereich, der eine Breite kleiner als Wellenlängen optischer Signale aufweist, die **durch** den Kern zu verbreiten sind, sodass sich die optischen Signale innerhalb sowohl des ersten als auch des zweiten Bereichs ausbreiten, wobei der positive thermooptische Koeffizient des ersten Bereichs den negativen thermooptischen Koeffizienten des zweiten Bereichs thermisch kompensiert, um einen thermisch kompensierten effektiven Index der Ausbreitung im Kern zu erzeugen.

2. Ebene Lichtwellenschaltung nach Anspruch 1, wobei der erste Bereich (40, 520b) ein Polymer umfasst.

3. Ebene Lichtwellenschaltung nach Anspruch 2, wobei das Polymer Silikon, PMMA oder BCB umfasst.

4. Ebene Lichtwellenschaltung nach Anspruch 1, wobei der zweite Bereich (42, 520a) dotiertes Siliciumdioxid umfasst.

5. Ebene Lichtwellenschaltung nach Anspruch 1, wobei der erste Bereich (40, 520b) einen umschlossenen Kanal bildet, der längs durch den mittleren Abschnitt des zweiten Bereichs (42, 520a) verläuft.

6. Ebene Lichtwellenschaltung nach Anspruch 1, wobei die ebene Lichtwellenschaltung ein Interferometer umfasst.

7. Ebene Lichtwellenschaltung nach Anspruch 6, wobei die ebene Lichtwellenschaltung ein Mach-Zehnder-Interferometer ist.

8. Ebene Lichtwellenschaltung nach Anspruch 1, wobei die ebene Lichtwellenschaltung einen Koppler umfasst.

9. Ebene Lichtwellenschaltung nach Anspruch 1, wobei die ebene Lichtwellenschaltung ein Array-Waveguide-Grating umfasst.

10. Ebene Lichtwellenschaltung nach Anspruch 1, ferner umfassend:

einen zweiten Wellenleiter, der nicht thermisch kompensierend ist, wobei der zweite Wellenleiter einen Kern umfasst, der einen einzelnen Werkstoff umfasst, der einen positiven thermooptischen Koeffizienten aufweist.

11. Ebene Lichtwellenschaltung nach Anspruch 1, wobei der erste Wellenleiter (5, 505) einen Biegeradius bis hinunter zu 10 mm aufweist.

12. Ebene Lichtwellenschaltung nach Anspruch 1, wobei sich der erste Bereich (40, 520b) um mindestens zwei Drittel in den zweiten Bereich (42, 520a) erstreckt.

13. Ebene Lichtwellenschaltung nach Anspruch 1, wobei der zweite Bereich (42, 520a) ein Polymer umfasst.

14. Ebene Lichtwellenschaltung nach Anspruch 1, wobei die Breite des inneren Kerns (20, 520) näherungsweise 1 Mikrometer oder weniger ist.

15. Ebene Lichtwellenschaltung nach einem der vorhergehenden Ansprüche, ferner einen Temperaturregler umfassend.

16. Verfahren zur Herstellung einen Wellenleiters, umfassend:

Bilden eines ersten Kernabschnitts (40, 520b) eines Wellenleiters, wobei der erste Kernabschnitt einen positiven thermooptischen Koeffizienten aufweist;
Bilden eines zweiten Kernabschnitts (42, 520a) durch im Wesentlichen Abdecken des ersten Kernabschnitts mit einem Werkstoff, der einen negativen thermooptischen Koeffizienten aufweist, wobei der erste Kernabschnitt im Wesentlichen längs durch einen mittleren Abschnitt des zweiten Kernabschnitts verläuft; und
Bilden einer Beschichtung (24, 12, 530, 512), die im Wesentlichen den ersten Kernabschnitt und den zweiten Kernabschnitt umschließt,
**dadurch gekennzeichnet, dass** der erste Kernabschnitt eine Breite kleiner als Wellenlängen optischer Signale aufweist, die durch die ersten und zweiten Kernabschnitte zu verbreiten sind, sodass sich die optischen Signale innerhalb sowohl der ersten als auch der zweiten Kernabschnitte ausbreiten, wobei der positive thermooptische Koeffizient des ersten Kernabschnitts den negativen thermooptischen Koeffizienten des zweiten Kernabschnitts thermisch kompensiert, um einen thermisch kompensierten effektiven Index der Ausbreitung in den ersten und zweiten Kernabschnitten zu erzeugen.

17. Verfahren nach Anspruch 16, wobei Bilden eines zweiten Kernabschnitts (42, 520a) ferner umfasst:

Abdecken des ersten Kernabschnitts (40, 520b) mit einem ersten Polymer.

18. Verfahren nach Anspruch 17, wobei Abdecken des ersten Kernabschnitts (40, 520b) mit einem ersten Polymer ferner umfasst:

Abdecken des ersten Kernabschnitts mit einem ersten Polymer, das einen Brechungsindex von näherungsweise 1,45 bis 1,6 aufweist.

19. Verfahren nach Anspruch 17, wobei Abdecken des ersten Kernabschnitts (40, 520b) mit einem ersten Polymer ferner umfasst:

Ansammeln des ersten Polymers um den ersten Kernabschnitt über einen Spinnprozess.

**20.** Verfahren nach Anspruch 17, wobei Bilden der Beschichtung ferner umfasst:

Abdecken der ersten und zweiten Kernabschnitte (40, 42, 520a, 520b) mit einem zweiten Polymer.

**21.** Verfahren nach Anspruch 20, wobei Abdecken der ersten und zweiten Kernabschnitte (40, 42, 520a, 520b) mit einem zweiten Polymer ferner umfasst:

Abdecken der ersten und zweiten Kernabschnitte mit dem zweiten Polymer, das einen Brechungsindex näherungsweise 0,01 bis 0,05 kleiner als jener des ersten Polymers aufweist.

**22.** Verfahren des Leitens eines optischen Signals durch einen ebenen Wellenleiter einer ebenen Lichtwellenschaltung hindurch nach einem der Ansprüche 1 - 15, wobei das optische Signal ein optisches Feld aufweist, wobei das Verfahren umfasst:

Leiten eines ersten Abschnitts des optischen Feldes im ersten Bereich;
Leiten eines zweiten Abschnitts des optischen Feldes im zweiten Bereich.

**23.** Verfahren nach Anspruch 22, wobei der erste Abschnitt des optischen Feldes und der zweite Abschnitt des optischen Feldes im Wesentlichen konzentrisch sind.

**24.** Verfahren nach Anspruch 22, wobei der erste Abschnitt des optischen Feldes innerhalb des zweiten Abschnitts des optischen Feldes geleitet ist.

**Revendications**

**1.** Circuit optique planaire comprenant :

un premier guide d'onde (5, 505) ayant une gaine (24, 12, 530, 512) et un coeur (20, 520) sensiblement confiné par la gaine, le coeur comprenant des première et seconde régions (40, 42, 520a, 520b) toutes les deux courant dans le sens de la longueur à travers le coeur et la première région courant sensiblement dans le sens de la longueur à travers une portion centrale de la seconde région, la première région ayant un coefficient thermo-optique positif, la seconde région ayant un coefficient thermo-optique négatif, **caractérisé en ce que** la première région a une largeur inférieure aux longueurs d'onde de signaux optiques devant être propagés par le coeur, de telle sorte que les signaux optiques se propagent à l'intérieur à la fois des première et seconde régions, dans lequel le coefficient thermo-optique positif de la première région compense thermiquement le coefficient thermo-optique négatif de la seconde région pour créer un indice de propagation efficace thermiquement compensé dans le coeur.

**2.** Circuit optique planaire selon la revendication 1, dans lequel la première région (40, 520b) comprend un polymère.

**3.** Circuit optique planaire selon la revendication 2, dans lequel le polymère comprend de la silicone, du PMMA ou du BCB.

**4.** Circuit optique planaire selon la revendication 1, dans lequel la seconde région (42, 520a) comprend de la silice dopée.

**5.** Circuit optique planaire selon la revendication 1, dans lequel la première région (40, 520b) forme un canal enfermé courant dans le sens de la longueur à travers la portion centrale de la seconde région (42, 520a).

**6.** Circuit optique planaire selon la revendication 1, dans lequel le circuit optique planaire comprend un interféromètre.

**7.** Circuit optique planaire selon la revendication 6, dans lequel le circuit optique planaire est un interféromètre de Mach-Zehnder.

8. Circuit optique planaire selon la revendication 1, dans lequel le circuit optique planaire comprend un coupleur.

9. Circuit optique planaire selon la revendication 1, dans lequel le circuit optique planaire comprend un réseau de guide d'onde en grille.

10. Circuit optique planaire selon la revendication 1, comprenant en outre :

   un second guide d'onde qui ne compense pas thermiquement, le second guide d'onde comprenant un coeur comprenant un matériau unique ayant un coefficient thermo-optique positif.

11. Circuit optique planaire selon la revendication 1, dans lequel le premier guide d'onde (5, 505) a un rayon de flexion jusqu'à 10 mm.

12. Circuit optique planaire selon la revendication 1, dans lequel la première région (40, 520b) s'étend dans la seconde région (42, 520a) d'au moins deux tiers.

13. Circuit optique planaire selon la revendication 1, dans lequel la seconde région (42, 520a) comprend un polymère.

14. Circuit optique planaire selon la revendication 1, dans lequel la largeur du coeur interne (20, 520) est d'approximativement 1 micron ou moins.

15. Circuit optique planaire selon l'une quelconque des revendications précédentes, comprenant en outre un régulateur de température.

16. Procédé de fabrication d'un guide d'onde comprenant les étapes consistant à :

   former une première portion de coeur (40, 520b) d'un guide d'onde, la première portion de coeur ayant un coefficient thermo-optique positif ;
   former une seconde portion de coeur (42, 520a) en couvrant sensiblement la première portion de coeur d'un matériau ayant un coefficient thermo-optique négatif, la première portion de coeur courant sensiblement dans le sens de la longueur à travers une portion centrale de la seconde portion de coeur ; et
   former une gaine (24, 12, 530, 512) qui enferme sensiblement la première portion de coeur et la seconde portion de coeur,
   **caractérisé en ce que** la première portion de coeur a une largeur inférieure aux longueurs d'onde de signaux optiques devant être propagés par les première et seconde portions de coeur, de telle sorte que les signaux optiques se propagent à l'intérieur à la fois des première et seconde portions de coeur, dans lequel le coefficient thermo-optique positif de la première portion de coeur compense thermiquement le coefficient thermo-optique négatif de la seconde portion de coeur pour créer un indice de propagation efficace thermiquement compensé dans les première et seconde portions de coeur.

17. Procédé selon la revendication 16, dans lequel la formation d'une seconde portion de coeur (42, 520a) comprend en outre l'étape consistant à :

   couvrir la première portion de coeur (40, 520b) avec un premier polymère.

18. Procédé selon la revendication 17, dans lequel la couverture de la première portion de coeur (40, 520b) avec un premier polymère comprend en outre l'étape consistant à :

   couvrir la première portion de coeur avec un premier polymère ayant un indice de réfraction d'approximativement 1,45 à 1,6.

19. Procédé selon la revendication 17, dans lequel la couverture de la première portion de coeur (40, 520b) avec un premier polymère comprend en outre l'étape consistant à :

   accumuler le premier polymère autour de la première portion de coeur via un procédé de rotation.

20. Procédé selon la revendication 17, dans lequel la formation de la gaine comprend en outre l'étape consistant à :

couvrir les première et seconde portions de coeur (40, 42, 520a, 520b) d'un second polymère.

21. Procédé selon la revendication 20, dans lequel la couverture des première et seconde portions de coeur (40, 42, 520a, 520b) avec un second polymère comprend en outre l'étape consistant à :

couvrir les première et seconde portions de coeur avec le second polymère ayant un indice de réfraction d'approximativement 0,01 à 0,05 inférieur à celui du premier polymère.

22. Procédé de guidage d'un signal optique à travers un guide d'onde planaire d'un circuit optique planaire selon l'une quelconque des revendications 1 à 15, dans lequel le signal optique a un champ optique, le procédé comprenant les étapes consistant à :

guider une première portion du champ optique dans ladite première région ;
guider une seconde portion du champ optique dans ladite seconde région.

23. Procédé selon la revendication 22, dans lequel la première portion du champ optique et la seconde portion du champ optique sont sensiblement concentriques.

24. Procédé selon la revendication 22, dans lequel la première portion du champ optique est guidée au sein de la seconde portion du champ optique.

5

UPPER CLADDING 24

CORE 20

LOWER CLADDING 12

SUBSTRATE 10

## FIG. 1A

5

30

UPPER CLADDING 24

CORE 20

LOWER CLADDING 12

SUBSTRATE 10

## FIG. 1B

5

50

40

42

UPPER CLADDING 24

LOWER CLADDING 12

SUBSTRATE 10

FIG. 1C

```
                    ╭─────── 100
              ┌──────────────┐
             (     START      )
              └──────────────┘
                     │
                     │ Y
                     ▼
                         ╭─────── 110
            ┌──────────────────┐
            │  FORM CORE OF     │
            │   WAVEGUIDE       │
            └──────────────────┘
                     │
                     ▼
                         ╭─────── 120
            ┌──────────────────┐
            │  CREATE TRENCH IN │
            │      CORE         │
            └──────────────────┘
                     │
                     ▼
                         ╭─────── 130
            ┌──────────────────┐
            │ DEPOSIT NEGATIVE  │
            │ TOC MATERIAL IN   │
            │     TRENCH        │
            └──────────────────┘
                     │
                     ▼
                         ╭─────── 140
              ┌──────────────┐
             (      END       )
              └──────────────┘
```

# FIG. 2

200

210a

210b

210c

220

222

210x

230

232

# FIG. 3

300

380

320

310

312

350

360

THERMALLY
COMPENSATED

THERMALLY
COMPENSATED

# FIG. 4

GE CORE     POLYMER     GE CORE
(GC)        (PC)        (GC)

CLADDING                          CLADDING
(CC)                              (CC)

## FIG. 5

A_CC

A_GC

A_PC

## FIG. 6

505

SUPPORT 524

LOWER CLADDING 512

520a

SUBSTRATE 510

## FIG. 7A

505

520b

SUPPORT 524

520a

LOWER CLADDING 512

SUBSTRATE 510

## FIG. 7B

505

POLYMER CLADDING 530

SUPPORT 524

CORE 520

LOWER CLADDING 512

SUBSTRATE 510

## FIG. 7C

520

520b

550          550

## FIG. 7D

FIG. 8

FIG. 9